# FASCICULE DE BREVET EUROPEEN

(11) **EP 0 678 547 B1**
(45) Date de publication et mention de la délivrance du brevet: **01.03.2000**
(21) Numéro de dépôt: 95200916.5
(22) Date de dépôt: 11.04.1995
(51) Int. Cl.: C08J 7/12

(54) **Procédé pour le traitement superficiel d'articles comprenant au moins une matière plastique**
Verfahren zur Oberflächenbehandlung von Kunststoff enthaltenden Gegenständen
Process for the surface treatment of articles comprising at least one plastic component

(30) Priorité: 19.04.1994 BE 9400404
(43) Date de publication de la demande: 25.10.1995
(73) Titulaire: SOLVAY (Société Anonyme), 1050 Bruxelles (BE)
(72) Inventeur: Dehennau, Claude, B-1410 Waterloo (BE); Hruska, Zdenek, B-1200 Bruxelles (BE); Menu, Frédéric, B-7080 Frameries (BE)
(74) Mandataire: Dambois, Denis Camille Daniel

(56) Documents cités:
- WO-A-93/24559
- DE-A- 3 535 602
- DATABASE WPI Section 768, Week 9403 Derwent Publications Ltd., London, GB; AN 94-022027 & JP-A-05 329 342 (DAINIPPON INK & CHEM KK) , 14 Décembre 1993
- ENCYCLOPEDIA OF POLYMER SCIENCE AND ENGINEERING, Supplement Volume, 1989, page 677

## Description

L'invention concerne un procédé pour le traitement superficiel d'articles comprenant au moins une matière plastique, qui permet notamment d'améliorer leur imprimabilité et leur adhérence.

Dans de nombreuses applications, des articles constitués de matière plastique, et en particulier des films, feuilles et corps creux, sont imprimés au moyen de techniques d'impression classiques telles que la sérigraphie, l'héliographie ou la flexographie.

Des encres ont été développées spécifiquement pour l'impression sur des articles constitués de certaines matières plastiques présentant des caractéristiques chimiques superficielles bien particulières, par exemple sur des articles à base de polyméthacrylate de méthyle (PMMA) ou de polychlorure de vinyle (PVC); on les qualifie généralement d'"encres pour PVC".

Les encres pour PVC sont très appréciées par les imprimeurs car elles donnent généralement aux motifs imprimés une qualité d'impression supérieure à celle obtenue au moyen d'autres types d'encres pour matières plastiques. Cependant, des tentatives de plus en plus nombreuses sont actuellement faites par les transformateurs de matières plastiques afin d'étendre le domaine d'application de ces encres à d'autres matières plastiques, notamment aux polyoléfines. Pour répondre à cette demande, de nouvelles techniques de traitement superficiel ont dû être développées par l'industrie des plastiques et des peintures, afin de permettre l'impression d'articles constitués de telles autres matières plastiques sur des lignes d'impression classiques. En effet, en raison de leur apolarité, certaines matières plastiques telles que les polyoléfines nécessitent, préalablement à leur impression, un traitement superficiel approprié, et l'utilisation d'une encre adaptée à ces matériaux. Bien que ces traitements augmentent la polarité des surfaces ainsi traitées, les encres utilisées pour imprimer ces articles leur restent spécifiques; dans le cas des polyoléfines, par exemple, on les qualifie souvent d'"encres pour polyoléfines". Ces encres sont malheureusement inefficaces pour imprimer les articles en PVC, sur lesquels elles n'adhèrent pas. De même, les encres utilisées pour imprimer le PVC n'adhèrent généralement pas sur les articles à base de polyoléfines, même lorsque ceux-ci ont été traités en surface.

Cette situation oblige les imprimeurs à changer d'encre selon qu'ils impriment des articles en PVC ou des articles en polyoléfines (PO), ce qui implique le nettoyage complet de l'installation. De plus, les imprimeurs restent très intéressés par les encres pour PVC, qui offrent dans de nombreux cas une qualité d'impression supérieure.

Le marché reste donc demandeur soit d'un film PO imprimable tant par des encres pour PVC que par des encres pour PO, soit d'une encre universelle aussi performante que les encres pour PVC mais utilisable aussi bien sur des supports en PO traités en surface que sur des supports en PVC. A ce jour, aucune de ces deux solutions n'est disponible.

De nombreux travaux ont été menés pour expliquer l'adhérence des encres par les modifications chimiques subies en surface par les articles traités superficiellement par des traitements tels que la décharge corona ou le flammage. Pour des articles en polyéthylène, par exemple, l'adhérence et le taux d'oxydation de la surface après le traitement ont été corrélés (The Effect of Corona and Ozone Treatment on the Adhesion of Ink to the Surface of Polyethylene - Polymer Engineering and Science, January 1977, vol. 17, n° 1, pp. 38-41). Le traitement plasma a également été largement étudié; malheureusement, cette technique est coûteuse et reste limitée à des traitements discontinus de produits à haute valeur ajoutée, ce qui exclut le traitement continu de produits courants. Ces dernières années, une attention particulière a été portée aux techniques de fluoration (comme décrit par exemple dans le brevet US 4 296 151) et d'oxyfluoration. Ces deux techniques, qui peuvent se pratiquer en continu, sont connues pour améliorer l'adhérence d'encre ou de revêtements divers sur des articles à base de PO. Dans un document (WO 93/24559) relatif à des films d'emballage présentant certaines propriétés tribologiques ainsi que des caractéristiques les rendant subsidiairement aptes à certains types d'impressions, on a en outre recommandé d'utiliser des teneurs superficielles en oxygène et en fluor particulières.
On notera encore que :
- La demande de brevet JP-A-5.329342 décrit un procédé discontinu de traitement d'une membrane poreuse en polyoléfine destinée à la séparation de mélanges gazeux, comprenant une étape d'oxydation à l'ozone ou par plasma, puis une étape de fluoration qui dure 60 minutes.
- La demande WO-A-93.24559 décrit la fluoration de films de polyoléfine par traitement au moyen de fluor et ensuite d'oxygène, et suggère d'utiliser des durées de fluoration de 1 à 30 minutes.
- La demande DE-A-3535602, qui concerne la fabrication de corps creux en matière thermoplastique, recommande d'utiliser des durées de fluoration de 5 secondes à 1 minute.
- L'Encyclopaedia of Polymer Science and Engineering (J. Wiley & Sons), Supplement Volume, 1989, p. 677, enseigne que de très nombreux traitements superficiels peuvent être appliqués à des films polymériques; en particulier, le traitement corona peut améliorer les propriétés adhésives.

Malgré tous ces travaux, aucune solution ne permet cependant, à l'heure actuelle, de produire des articles à base de matière plastique, et en particulier à base de polyoléfines, qui soient imprimables indifféremment par des encres pour PVC ou pour PO.

En outre, certains des traitements superficiels évoqués ci-dessus ne sont efficaces qu'à court terme, c'est-à-dire que, par exemple, un film de polyoléfine traité par décharge corona est effectivement apte à une impression de meilleure qualité par une encre pour PO pendant les semaines qui suivent son traitement, mais perd cette propriété au fil du temps. Ceci constitue un important inconvénient industriel et économique, vu que la plupart des articles sont imprimés en un endroit différent de leur lieu de fabrication, ou sont entreposés avant leur impression, ce qui signifie qu'un délai de plusieurs mois peut parfois séparer leur fabrication de leur impression.

L'objectif de la présente invention est dès lors de fournir un procédé de traitement superficiel d'au moins une zone d'un article comprenant au moins une matière plastique, permettant d'obtenir un article dont la ou les zones traitées soient imprimables indifféremment par tout type d'encre pour matière plastique, et dont l'imprimabilité reste stable dans le temps.

A cette fin, l'invention a pour premier objet un procédé de traitement superficiel d'au moins une zone d'un article à base d'au moins une matière plastique comprenant (a) au moins une étape d'oxydation superficielle énergique de cette zone, comprenant un traitement corona, suivie de (b) au moins une étape de fluoration en phase gazeuse.

Les articles visés dans le cadre de la présente invention peuvent être de tout type, notamment des articles plats tels que films, des feuilles ou des plaques, ou encore des corps creux tels que des bouteilles, fûts, réservoirs, flacons, tuyaux, etc. L'invention est particulièrement avantageuse dans le cas d'articles plats, spécialement dans le cas de films. Ces articles peuvent être produits par tout moyen, notamment par calandrage, par extrusion ou par coextrusion, par exemple par extrusion-soufflage, extrusion-couchage, extrusion en filière plate ainsi que par les techniques de coextrusion apparentées. Conformément à l'invention, au moins une zone superficielle de l'article doit comprendre au moins une matière plastique. De préférence, cette zone est essentiellement constituée d'au moins une matière plastique. Une ou plusieurs autres parties de l'article peuvent être essentiellement constituées d'un ou plusieurs autres matériaux tels que du métal ou un matériau cellulosique. L'invention s'applique aux articles monocouches et multicouches. Ainsi, par exemple, l'invention s'applique avantageusement à un article composite multicouche dont au moins la couche superficielle à traiter comprend au moins une matière plastique. Ladite couche est de préférence essentiellement constituée d'au moins une matière plastique. Une ou plusieurs autres couches peuvent dans ce cas être essentiellement constituées d'un ou plusieurs autres matériaux.

Par "matière plastique", on entend désigner tout polymère thermoplastique, élastomérique ou thermodurcissable, ainsi que tout mélange de tels polymères. Le terme "polymère" désigne à la fois les homopolymères et les copolymères. De bons résultats ont été obtenus avec des polymères thermoplastiques. En particulier, de très bons résultats ont été obtenus avec des polymères du chlorure de vinyle (VC), plastifiés ou non, avec des polymères du fluorure de vinylidène (VdF) et avec des polyoléfines Les polymères du chlorure de vinyle recouvrent le poly(chlorure de vinyle) lui-même ainsi que les copolymères du VC et d'un ou plusieurs autres comonomères tels que le chlorure de vinylidène ou l'acétate de vinyle. Les polymères du fluorure de vinylidène recouvrent le poly(fluorure de vinylidène) lui-même ainsi que les copolymères du VdF et d'un ou plusieurs autres monomères tel que l'hexafluoropropylène.

Le procédé selon l'invention donne de bons résultats lorsque la matière plastique comprise dans la zone à traiter comprend au moins une polyoléfine. Par polyoléfine, on entend désigner tout homopolymère d'oléfine, tout copolymère constitué d'au moins deux types d'oléfines différents, ainsi que tout copolymère comprenant au moins 70 % d'unités dérivées d'oléfines, ainsi que les mélanges de ces homo- et/ou copolymères. Par oléfines, on entend aussi bien désigner les mono-oléfines telles que l'éthylène, le propylène ou le butène que les oléfines comportant plus d'une double liaison, par exemple des dioléfines telles que le butadiène. A titre d'exemples non-limitatifs de polyoléfines, on peut citer les polymères du propylène et de l'éthylène. On entend ainsi désigner aussi bien leurs homopolymères que leurs copolymères, ces derniers pouvant éventuellement comprendre, outre du propylène et/ou de l'éthylène, un ou plusieurs autres comonomères oléfiniques, la quantité totale de ceux-ci restant de préférence inférieure à 20 % par rapport au poids du copolymère. Des résultats intéressants ont été obtenus lorsque la matière plastique de la zone à traiter est essentiellement constituée d'un polymère du propylène ou d'un mélange de 50 à 99 % (par rapport au poids total des polymères) d'au moins un polymère du propylène et de 50 à 1 % d'au moins un polymère de l'éthylène.

Plusieurs matières plastiques différentes peuvent éventuellement être utilisées, en mélanges homogènes ou hétérogènes, par exemple en vue d'améliorer la résistance au choc de l'article.

A cette ou ces matières plastiques peuvent en outre être éventuellement ajoutées une ou plusieurs charges minérales classiques, telles que du carbonate de calcium, du dioxyde de titane, du mica, etc., des charges d'origine végétale telles que de la sciure de bois, des fibres de renforcement telles que par exemple des fibres de verre ou de carbone, ainsi qu'un ou plusieurs additifs classiques tels que stabilisants, lubrifiants, antioxydants, etc.

Par fluoration, on entend désigner tout traitement connu au moyen d'un mélange gazeux contenant du fluor et permettant de lier chimiquement celui-ci à une matière plastique. Des exemples en sont donnés dans les documents US 4 296 151 et WO 93/24559 cités ci-dessus, ainsi que dans les exemples qui suivent (à titre non limitatif). On utilise de préférence un mélange d'azote et de 1 à 10 % en volume de fluor. De préférence, la pression de ce mélange est voisine de la pression atmosphérique. De bons résultats sont obtenus lorsque la température est de 25 à 90 °C. On peut pour ce faire chauffer l'enceinte et/ou le mélange gazeux. La durée de ce traitement est évidemment liée à l'ensemble des conditions opératoires. La fluoration est en général de courte durée. La durée de la fluoration est avantageusement d'au plus 12 secondes. De préférence, elle ne dépasse pas 4 secondes et plus préférentiellement encore elle n'excède pas 2 secondes. Le mélange gazeux utilisé peut éventuellement contenir en outre de l'oxygène ou d'autres gaz. En pratique, il est d'ailleurs très difficile, surtout dans les installations fonctionnant en continu, d'empêcher la présence de traces d'oxygène lors de la fluoration. La fluoration peut être réalisée en continu ou en discontinu; pour des raisons pratiques, on préfère cependant la réaliser en continu.

Par "oxydation superficielle énergique", on entend désigner tout traitement oxydatifà haute énergie tel que flammage, décharge corona, traitement plasma en présence d'oxygène, traitement à l'ozone ou encore une étape d'oxydation à l'oxygène avec chauffage à une température inférieure à la température de fusion de la matière de la zone, ainsi que les combinaisons de plusieurs de ceux-ci. Ces traitements permettent de lier chimiquement de l'oxygène à une matière plastique.

Lorsque l'on retient l'oxydation à l'oxygène avec chauffage, on amène de préférence la zone à une température inférieure de 20 à 130 °C à la température de fusion de sa matière constitutive. Ce chauffage peut se réaliser par tout moyen connu, par exemple par rayonnement infra-rouge ou par soufflage d'air chaud.

De préférence, l'oxydation superficielle énergique comprend un traitement corona. Celui-ci se déroule avantageusement dans une atmosphère essentiellement constituée d'air, à une pression voisine de la pression atmosphérique. De préférence, la tension appliquée est de l'ordre de 10 à 30 kV. La fréquence utilisée est de préférence de l'ordre de 10 à 30 kHz.

On combine avantageusement une oxydation avec chauffage et un traitement corona.

L'oxydation superficielle énergique peut être réalisée en continu ou en discontinu; pour des raisons pratiques, on préfère le plus souvent la réaliser en continu.
On préfère tout particulièrement qu'au moins une étape de fluoration soit précédée par au moins une étape d'oxydation superficielle énergique. Les délais séparant les différentes étapes peuvent être quelconques, pour autant que l'effet d'activation d'une étape donnée subsiste toujours au moment de la suivante. Ainsi, le procédé de traitement superficiel peut comprendre une étape d'oxydation superficielle énergique, suivie d'une étape de fluoration quelques jours plus tard. Néanmoins, dans le cas particulier où l'oxydation superficielle énergique comprend une oxydation avec chauffage, l'oxydation avec chauffage est le plus souvent rapidement suivie de l'étape de fluoration et même de préférence ces deux traitements sont simultanés. On préfère en outre, notamment pour des raisons de productivité, réaliser l'ensemble du traitement superficiel en continu, les différentes étapes évoquées ci-dessus étant réalisées à la suite les unes des autres et sans délais importants. De manière particulièrement préférée, le traitement superficiel est réalisé en ligne avec les étapes de fabrication des articles (extrusion, etc.).

Avantageusement, le procédé de traitement superficiel consiste essentiellement en une étape d'oxydation superficielle énergique suivie d'une étape de fluoration.

Les articles peuvent être traités aussi bien sur la totalité que sur une ou plusieurs zones de leur surface. Par exemple, dans le cas d'une plaque composite constituée d'une tôle d'acier revêtue d'un film de polyoléfine, on peut ne traiter superficiellement que la face "film", ou même seule une certaine zone de cette face, sans s'écarter du cadre de la présente invention. Outre la stabilité de leur imprimabilité au fil du temps, un avantage particulièrement important des articles ainsi traités est qu'ils sont imprimables aussi bien par des encres pour PO que pour PVC, contrairement aux articles connus à ce jour.

Des résultats très intéressants peuvent être obtenus si l'on utilise une variante particulière de ce procédé de traitement superficiel, en vue d'obtenir des concentrations spécifiques en oxygène et en fluor : selon une variante avantageuse de l'invention, le procédé de traitement superficiel est tel que la zone traitée comporte en surface du fluor et de l'oxygène dans des concentrations telles que le rapport atomique oxygène/carbone (O/C), mesuré par spectroscopie ESCA à une profondeur de 1.5 nm, soit d'au moins 0.08, et que le rapport atomique fluor/carbone (F/C), mesuré de la même façon, ait une valeur d'au moins 90 % de celle du rapport O/C, et d'au plus 290 % de ce rapport.

De préférence, il se déroule dans des conditions telles que, dans la zone superficielle traitée, le rapport atomique O/C soit supérieur à 0.1. Le rapport O/C y est par ailleurs généralement inférieur à 0.40, et de préférence inférieur à 0.30. De préférence, le rapport atomique F/C est supérieur à 95 % du rapport O/C. De manière particulièrement préférée, il est inférieur à 200 % de ce rapport.

La spectroscopie ESCA (Electron Spectroscopy for Chemical Analysis) utilisée pour ces mesures est notamment décrite dans "Practical Surface Analysis", vol. 1, D. Briggs and M.P. Seah Eds., J. Wiley & Sons Ltd, 1990.

Comme exposé précédemment, le procédé de traitement superficiel ainsi défini permet d'obtenir des articles dont au moins une zone comprend au moins une matière plastique, en particulier une ou plusieurs polyoléfines, sur laquelle aussi bien les encres pour PVC que les encres pour PO adhèrent bien, même lorsque l'impression a lieu plusieurs mois après leur fabrication.

Un autre objet de la présente invention concerne dès lors un procédé de fabrication d'un article imprimé comprenant un traitement superficiel spécifique tel que défini ci-dessus et au moins une étape d'impression de la zone ainsi traitée. L'impression peut se faire par tout procédé connu, par exemple par sérigraphie, héliographie, flexographie ou au moyen d'une racle à fil. De très bons résultats sont obtenus lorsque l'impression se fait au moyen d'encres pour PVC. Par "encre pour PVC", on entend désigner une encre qui, appliquée sur un substrat de PVC, adhère bien à ce dernier, c'est-à-dire obtient un classement de "1" ou "2" dans le test défini par la norme ASTM D-3359 ("scotch tape test"). Des exemples non limitatifs de telles encres sont fournis ci-dessous.

En outre, on a également constaté avec intérêt que les articles, et en particulier les films, traités selon le procédé de traitement superficiel de l'invention présentent des propriétés, en particulier des propriétés d'adhérence, qui les rendent aptes à d'autres applications que l'impression. La présente invention vise dès lors également à couvrir un procédé de fabrication d'un article composite multicouche, dont au moins une couche est à base d'au moins une matière plastique et a été traitée superficiellement selon le procédé de traitement superficiel défini ci-dessus. Un avantage du procédé selon l'invention est que l'adhérence qu'il confère à un article en matière plastique est telle qu'on peut généralement se passer d'adhésif en vue d'utiliser celui-ci pour la fabrication d'un article multicouche. Ce procédé donne des résultats particulièrement intéressants lorsqu'on l'applique à des articles plats, pour former des films, feuilles ou plaques composites constitués par exemple de plusieurs couches de différentes matières plastiques, ou encore d'une ou plusieurs couches de matières plastiques et d'une ou plusieurs couches d'autres matériaux, tels que du métal, qu'un matériau thermoplastique ou qu'un matériau cellulosique, au moins l'une des couches de matière plastique ayant été traitée superficiellement, sur au moins l'une de ses faces, au moyen du procédé de traitement superficiel de l'invention.

Les deux exemples d'application du procédé de traitement superficiel de l'invention décrits ci-dessus (à titre non-limitatif), à savoir la fabrication d'articles imprimés et la fabrication d'articles multicouches, peuvent parfois être combinés. Ainsi, par exemple, un film de matière plastique traité sur ses 2 faces conformément au procédé de l'invention peut être apposé sur un support métallique, thermoplastique ou cellulosique sur l'une de ses faces, et imprimé sur l'autre. Cette combinaison est particulièrement intéressante dans des domaines tels que l'emballage, en particulier dans la conserverie.

### Exemples

La présente invention et les avantages qu'elle procure sont illustrés par les exemples qui suivent, sans caractère limitatif Les exemples 1R, 3R, 5R, 8R et 9R sont donnés à titre de comparaison.

### Exemple 1R

Un film extrudé constitué d'un mélange de PP (ELTEX® P HL001) et de PE (ELTEX B 4020) (80:20 en poids) a été traité en continu, à une vitesse de 5 m/min (correspondant à un temps de traitement de 12 s) à température ambiante de 25 °C, au moyen d'un mélange gazeux comprenant (en volume) 10 % de fluor et 90 % d'azote. La teneur en oxygène est réduite au minimum par purge à l'azote; néanmoins une très faible quantité d'oxygène peut être présente, en raison de l'étanchéité imparfaite de l'installation de traitement continu.

### Exemple 2

Avant d'être fluoré, le même film que dans l'exemple 1R a subi un traitement corona à l'aide d'une installation de marque AHLBRANDT® à une vitesse de 5 m/min (correspondant à un temps de traitement de 12 s). Le système utilise un générateur de type 5402 (fréquence 30 kHz; tension 14 kV). Les deux électrodes, revêtues de céramique, sont distantes de la contre-électrode de 3 mm. Le courant de sortie est de 5.6 A.

### Exemple 3R

Un film calandré, constitué d'un copolymère PP-PE ELTEX P KL 177 comprenant 11 pcr de TiO₂ a été traité en continu, à une vitesse de 5 m/min (correspondant à un temps de traitement de 12 s) à température ambiante de 25 °C, au moyen d'un mélange gazeux comprenant (en volume) 5 % de fluor et 95 % d'azote, à température ambiante de 25 °C. Des traces d'oxygène peuvent être également présentes, pour les mêmes raisons que dans l'exemple 1R.

### Exemple 4

Avant d'être fluoré comme dans l'exemple 3R, le même film que dans l'exemple 3R a subi un traitement corona dans les conditions mentionnées dans l'exemple 2.

### Exemple 5R

Un film calandré identique à celui décrit dans l'exemple 3R a été fluoré dans les mêmes conditions, à l'exception de la température du film qui était de 60 °C.

### Exemple 6

Avant d'être fluoré comme dans l'exemple 5R, et après avoir été chauffé, le même film a subi un traitement corona dans les conditions mentionnées dans l'exemple 2.

Les échantillons obtenus selon les exemples 1R à 6 ont subi un vieillissement de 100 heures en étuve ventilée à 70 °C. On a indiqué dans le tableau qui suit la tension superficielle totale initiale (g^{T}o) et la tension superficielle (g^{T}v) après vieillissement, mesurée au moyen d'encres-test selon la norme ASTM D-2587-67 (version du 24.02.1984), ainsi que l'adhérence d'une encre pour PVC SICPA® VINYLOFLEX (à base de solvant), évaluée après le vieillissement selon la norme ASTM D-3359 (5=Très mauvaise, 4=Mauvaise, 3=Moyenne, 2=Bonne, 1=Très bonne).

Dans ces exemples, l'impression des films s'effectue par enduction à l'aide d'une racle à fil, qui permet le dépôt d'une couche d'encre de 6 pm; le temps de séchage de l'encre (à température ambiante) est fixé à 3 heures pour toutes les encres utilisées.

| Exemple | g^{T}o (mN/m) | g^{T}v (mN/m) | Adhérence de l'encre |
|---|---|---|---|
| 1R | 56 | 50 | 4 |
| 2 | 56 | 54 | 1 |
| 3R | 40 | 32 | 4 |
| 4 | 48 | 39 | 1 |
| 5 | 55 | 49 | 2 |
| 6 | 58 | 50 | 1 |

L'adhérence d'encres pour PO à base d'eau (LORILLEUX® PACIFIC) ou à base de solvant (SICPA POLYFLEX) est de niveau "1" " pour tous les films des exemples 1R à 7.

### Exemple 7

Le film et le traitement sont identiques à ceux de l'exemple 6, mais la vitesse est de 60 m/min (correspondant à un temps de fluoration de 1 s). L'adhérence de l'encre SICPA VINYLOFLEX est de 1 après traitement et reste à cette valeur après un vieillissement de 100 h à 70°C.

### Exemple 8R

Un film calandré à base de résine PVC de type SOLVIC 264PC contenant 14,4 % de dioctylphtalate et 2,1 % d'huile de soya époxydée a subi un traitement corona au moyen de l'installation utilisée dans l'exemple 2. La tension superficielle mesurée selon la norme ASTM D-2587-67 était de 40 mN/m après traitement et de 34 mN/m après 2 mois de stockage à température ambiante.

### Exemple 9R

Un film identique à celui de l'exemple 8R a été traité selon les conditions de l'exemple 3R. La tension superficielle mesurée selon la norme ASTMD-2587-67 était de 58 mN/m après traitement et de 52 mN/m après 2 mois de stockage à température ambiante.

### Exemple 10

Un film identique à celui de l'exemple 8R a été traité selon les conditions de l'exemple 4. La tension superficielle mesurée selon la norme ASTM D-2587-67 était de 62 mN/m après traitement et de 58 mN/m après 2 mois de stockage à température ambiante.

## Revendications

1. Procédé continu de traitement superficiel d'au moins une zone d'un article à base d'au moins une matière plastique, comprenant (a) au moins une étape d'oxydation superficielle énergique de cette zone, comprenant un traitement corona, suivie de (b) au moins une étape de fluoration en phase gazeuse.

2. Procédé selon la revendication 1, dans lequel l'article est un film.

3. Procédé selon l'une des revendications précédentes, dans lequel l'article est un article composite multicouche dont au moins la couche superficielle à traiter comprend au moins une matière plastique.

4. Procédé selon l'une des revendications précédentes, dans lequel la matière plastique comprend au moins une polyoléfine.

5. Procédé selon l'une des revendications précédentes, dans lequel la fluoration en phase gazeuse dure au plus 12 secondes.

6. Procédé selon l'une des revendications précédentes, dans lequel la fluoration se déroule à une température de 25 à 90 °C.

7. Procédé selon l'une des revendications précédentes, tel que la zone traitée comporte en surface des concentrations de fluor et d'oxygène telles que le rapport atomique oxygène/carbone (O/C), mesuré par spectroscopie ESCA à une profondeur de 1.5 nm, soit d'au moins 0.08, et que le rapport atomique fluor/carbone (F/C), mesuré de la même façon, ait une valeur d'au moins 90 % de celle du rapport O/C, et d'au plus 290 % de ce rapport.

8. Procédé de fabrication d'un article imprimé, comprenant un traitement superficiel selon l'une des revendications précédentes et au moins une étape d'impression de la zone ainsi traitée.

9. Procédé selon la revendication 8, dans lequel l'impression se fait au moyen d'une encre pour PVC.

10. Procédé de fabrication d'un article composite multicouche, dont au moins une couche est à base d'au moins une matière plastique et a été traitée superficiellement selon le procédé de l'une des revendications 1 à 7.

## Patentansprüche

1. Kontinuierliches Verfahren zur Oberflächenbehandlung von wenigstens einem Bereich eines Gegenstands auf der Basis von wenigstens einem Kunststoff, das (a) wenigstens einen Schritt zur kräftigen Oberflächenoxidation dieses Bereichs, der eine Korona-Behandlung umfasst, umfasst und dem (b) wenigstens ein Schritt zur Fluorierung in der Gasphase folgt.

2. Verfahren gemäss Anspruch 1, bei dem der Gegenstand ein Film ist.

3. Verfahren gemäss einem der vorhergehenden Ansprüche, bei dem der Gegenstand ein Mehrschichtverbundgegenstand ist, bei dem wenigstens die zu behandelnde Oberflächenschicht wenigstens einen Kunststoff umfasst.

4. Verfahren gemäss einem der vorhergehenden Ansprüche, bei dem der Kunststoff wenigstens ein Polyolefin umfasst.

5. Verfahren gemäss einem der vorhergehenden Ansprüche, bei dem die Fluorierung in der Gasphase höchstens 12 Sekunden dauert.

6. Verfahren gemäss einem der vorhergehenden Ansprüche, bei dem die Fluorierung bei einer Temperatur von 25 bis 90 °C abläuft.

7. Verfahren gemäss einem der vorhergehenden Ansprüche, so dass der behandelte Bereich an der Oberfläche solche Fluor- und Sauerstoffkonzentrationen enthält, dass das Atomverhältnis Sauerstoff/Kohlenstoff (O/C), gemessen durch ESCA-Spektroskopie bei einer Tiefe von 1,5 nm, wenigstens 0,08 ist, und dass das Atomverhältnis Fluor/Kohlenstoff (F/C), auf dieselbe Weise gemessen, einen Wert von wenigstens 90% desjenigen des O/C-Verhältnisses und höchstens 290% dieses Verhältnisses hat.

8. Verfahren zur Herstellung eines bedruckten Gegenstands, das eine Oberflächenbehandlung gemäss einem der vorhergehenden Ansprüche und wenigstens einen Schritt zum Bedrucken des so behandelten Bereichs umfasst.

9. Verfahren gemäss Anspruch 8, bei dem das Bedrucken mittels einer Tinte für PVC geschieht.

10. Verfahren zur Herstellung eines Mehrschichtverbundgegenstands, bei dem wenigstens eine Schicht auf der Basis von wenigstens einem Kunststoff besteht und an der Oberfläche gemäss dem Verfahren eines der Ansprüche 1 bis 7 behandelt wurde.

## Claims

1. Continuous process for the surface treatment of at least one portion of an article based on at least one plastic material, comprising (a) at least one step of energetic surface oxidation of this portion comprising a corona treatment, followed by (b) at least one step of fluorination in gas phase.

2. Process according to Claim 1, in which the article is a film.

3. Process according to one of the preceding claims, in which the article is a multilayer composite article of which at least the surface layer to be treated comprises at least one plastic material.

4. Process according to one of the preceding claims, in which the plastic material comprises at least one polyolefin.

5. Process according to one of the preceding claims, in which the fluorination in gas phase lasts at most 12 seconds.

6. Process according to one of the preceding claims, in which the fluorination takes place at a temperature from 25 to 90°C.

7. Process according to one of the preceding claims, such that the treated portion includes, at the surface, fluorine and oxygen concentrations such that the oxygen/carbon (O/C) atomic ratio, measured by ESCA spectroscopy at a depth of 1.5 nm, is at least 0.08 and that the fluorine/carbon (F/C) atomic ratio, measured in the same way, has a value of at least 90% of that of the O/C ratio and of at most 290% of this ratio.

8. Process for manufacturing a printed article, comprising a surface treatment according to one of the preceding claims and at least one step of printing on the portion thus treated.

9. Process according to claim 8, in which the printing is made using an ink for PVC.

10. Process for manufacturing a multilayer composite article of which at least one layer is based on at least one plastic material and has been surface treated according to the process of one of Claims 1 to 8.
